# EUROPEAN PATENT SPECIFICATION

(11) **EP 1 760 597 B1**
(45) Date of publication and mention of the grant of the patent: **23.09.2009**
(21) Application number: 06017366.3
(22) Date of filing: 21.08.2006
(51) Int. Cl.: G06F 13/10

(54) **Control apparatus and method, and control program**
Steuervorrichtung, Steuerverfahren und Steuerprogramm
Procédé, appareil de commande et programme de commande

(30) Priority: 24.08.2005 JP 2005242521
(43) Date of publication of application: 07.03.2007
(73) Proprietor: Sony Corporation, Tokyo (JP)
(72) Inventor: Yonemoto, Kensuke, Shinagawa-ku Tokyo (JP)
(74) Representative: Müller - Hoffmann & Partner

(56) References cited:
- JP-A- 2001 134 382
- US-A1- 2004 201 628

## Description

### BACKGROUND OF THE INVENTION

### 1. Field of the Invention

The present invention relates to a control apparatus and a control method, and a program, and particularly to a control apparatus and a control method, and a program that can quickly control a controlled device.

### 2. Description of the Related Art

In US 6.958.749 B1, an apparatus and method for manipulating a touch-sensitive display panel is disclosed. In US 2004/0201628 A1, a system to redirect mouse and keyboard control among multiple machines in order to provide keyboard and mouse inputs for more than one display is disclosed.

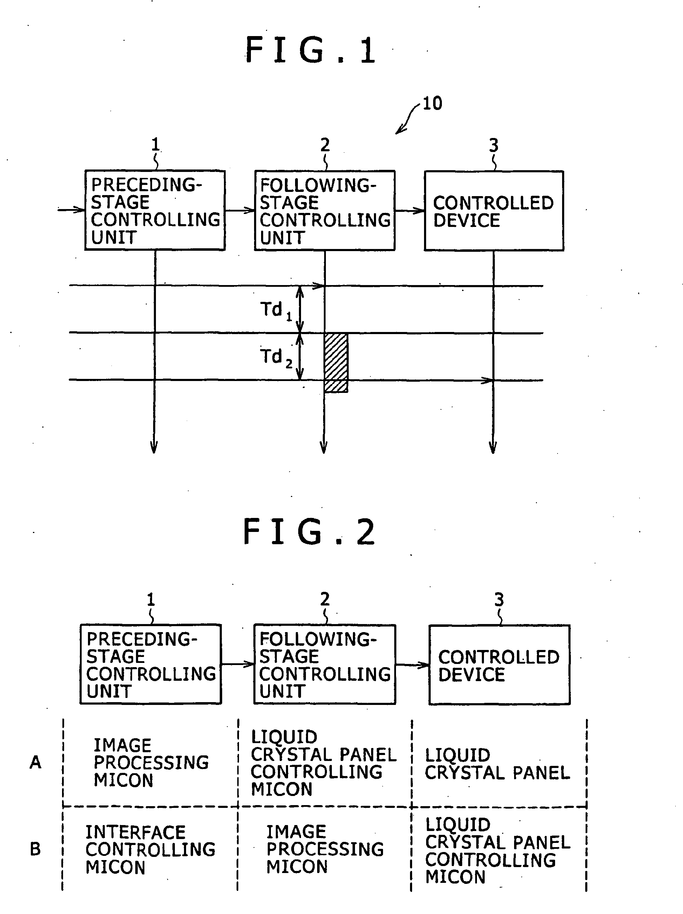

In apparatuses involving some kind of electric control, such as a television receiver, a portable telephone, and a robot, for example, predetermined parts forming each apparatus operate as a preceding-stage controlling unit 1, a following-stage controlling unit 2, and a controlled device 3 as appropriate as shown in FIG. 1 to perform a predetermined process.

A television receiver, for example, performs control to decrease the brightness of a liquid crystal panel for a moment when a channel is changed, in order to hide an image disturbance caused at the time of the channel change. The process is achieved by operations of an image processing microcomputer (hereinafter abbreviated to a micon) for controlling image processing as a preceding-stage controlling unit 1, a micon for controlling a liquid crystal panel as a following-stage controlling unit 2, and the liquid crystal panel as a controlled device 3 in the television receiver as shown in FIG. 2A.

Specifically, the image processing micon as the preceding-stage controlling unit 1 outputs a command to decrease the brightness of the liquid crystal panel to the micon for controlling the liquid crystal panel as the following-stage controlling unit 2 in response to the input of a command to change a channel (external event). The micon for controlling the liquid crystal panel as the following-stage controlling unit 2 calculates data necessary to darken an image, and then transmits the data to the liquid crystal panel as the controlled device 3.

When an operation of a remote control by a user, for example, is regarded as an external event, as shown in FIG. 2B, an interface controlling micon that receives a command to change a channel from the remote control and transmits the command to the image processing micon operates as preceding-stage controlling unit 1, the image processing micon as preceding-stage controlling unit 1 in the above example operates as following-stage controlling unit 2, and the micon for controlling the liquid crystal panel as following-stage controlling unit 2 in the above example operates as controlled device 3.

When a process in the preceding-stage controlling unit 1, the following-stage controlling unit 2, and the controlled device 3 (hereinafter referred to collectively as a control system 10 when the preceding-stage controlling unit 1, the following-stage controlling unit 2, and the controlled device 3 do not need to be differentiated from each other) is speeded up, a process of the apparatus as a whole can be speeded up. It is therefore very important to speed up the process in the control system 10.

A time required for the process of the control system 10 in the example of FIG. 1 includes a time Td1 from the output by the preceding-stage controlling unit 1 of data corresponding to an external event to the following-stage controlling unit 2 to the starting by the following-stage controlling unit 2 of a process (calculation) corresponding to the data, and a time Td2 for the process of the following-stage controlling unit 2.

That is, when the time Td1 or the time Td2 can be shortened, the process in the control system 10 can be speeded up.

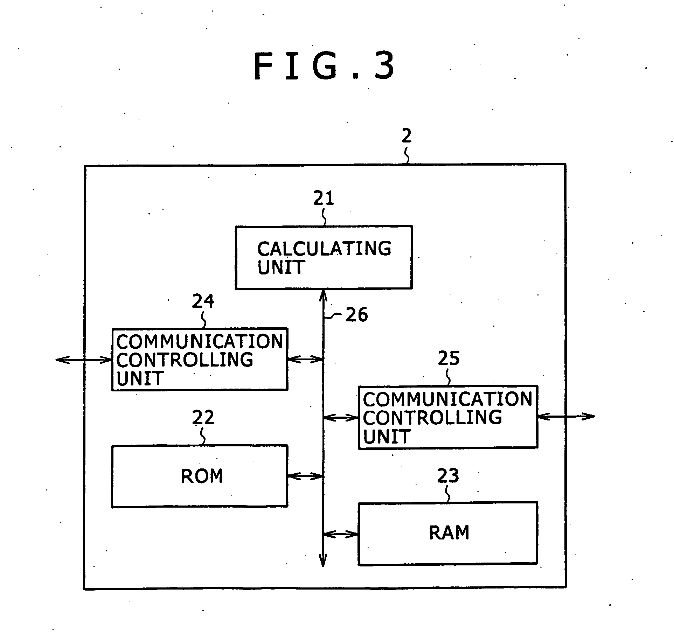

Consideration will be given to the process time Td2 in the following. First, a configuration of the following-stage controlling unit 2 will be described with reference to FIG. 3.

The following-stage controlling unit 2 includes a calculating unit 21, a ROM (Read Only Memory) 22 such as a flash ROM or the like, a RAM (Random Access Memory) 23, a communication controlling unit 24, and a communication controlling unit 25. These parts are connected to each other by an internal bus 26.

The calculating unit 21 is formed by a CPU (Central Processing Unit) or the like. The calculating unit 21 performs various processes according to a program loaded from the ROM 22 into the RAM 23. The RAM 23 also stores data and the like necessary for the calculating unit 21 to perform the various processes as required.

Incidentally, the ROM 22 and the RAM 23 may be present or absent, depending on specifications of the following-stage controlling unit 2 (micon).

The communication controlling unit 24 communicates with the preceding-stage controlling unit 1 to receive data supplied from the preceding-stage controlling unit 1. The communication controlling unit 24 supplies the data to the calculating unit 21.

The communication controlling unit 25 communicates with the controlled device 3 to supply a result of calculation supplied from the calculating unit 21 to the controlled device 3.

The communication controlling unit 24 and the communication controlling unit 25 are formed by for example a peripheral within the micon, such as an I2C interface, a USB, a serial communication port or the like.

Incidentally, FIG. 3 shows one communication controlling unit communicating with the preceding-stage controlling unit 1 and one communication controlling unit communicating with the controlled device 3 in an example of configuration of the following-stage controlling unit 2 connected to one preceding-stage controlling unit 1 and one controlled device 3, a plurality of communication controlling units can be provided for each of the preceding-stage controlling unit 1 and the controlled device 3.

In addition, a communication controlling unit connected to a predetermined storage device may be provided so that the calculating unit 21 can perform a calculation process using data stored in the storage device.

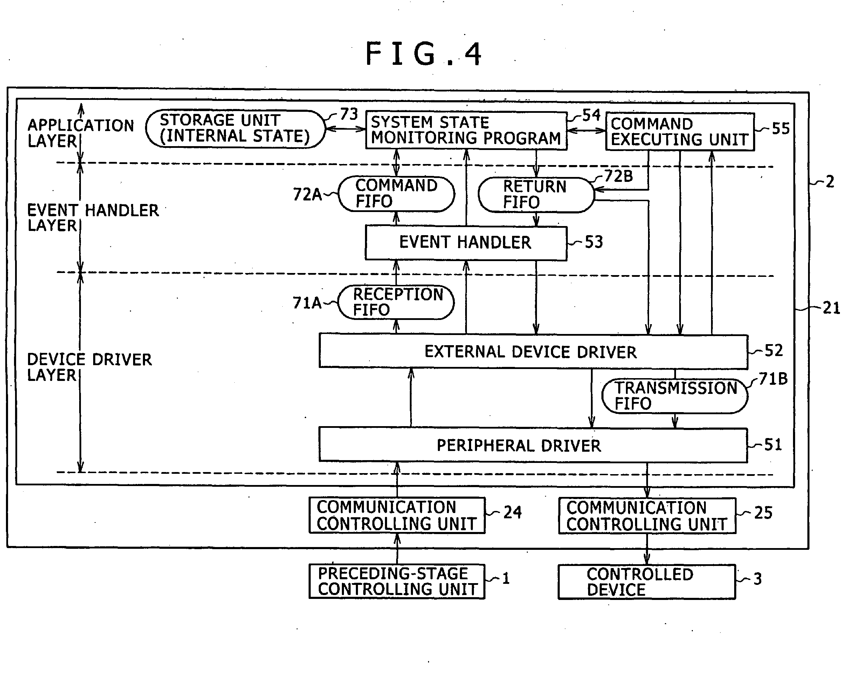

Next, referring to FIG. 4, description will be made of an example of configuration of software of the following-stage controlling unit 2 which software is executed by the calculating unit 21. Incidentally, this software is executed using resources within the following-stage controlling unit 2, such as the calculating unit 21, the RAM 23, the communication controlling unit 24, the communication controlling unit 25 and the like.

The software executed by the calculating unit 21 has a hierarchical structure including a device driver layer, an event handler layer, and an application layer.

The device driver layer includes a peripheral driver 51, an external device driver 52, a reception FIFO 71A, and a transmission FIFO 71B.

The peripheral driver (for example an IIC (Inter-Integrated Circuit)) 51 controls the communication controlling unit 24 and the communication controlling unit 25.

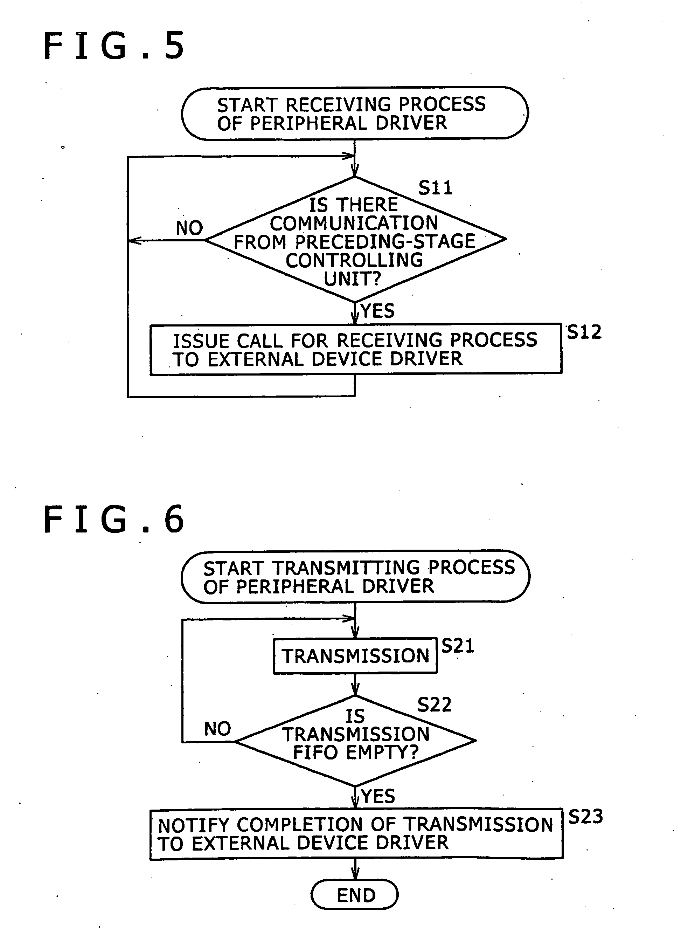

Specifically, the peripheral driver 51 performs a receiving process represented in a flowchart of FIG. 5. Incidentally, the receiving process in the peripheral driver 51 is generally performed simultaneously with the initialization of the control system 10.

The peripheral driver 51 stands by until data supplied from the preceding-stage controlling unit 1 is received (input) via the communication controlling unit 24 (step S11). When data supplied from the preceding-stage controlling unit 1 is received (input), the peripheral driver 51 transmits the received data to the external device driver 52, and issues a call for a receiving process to the external device driver 52 so that the data is stored in the reception FIFO 71A (step S12). Thereafter the peripheral driver 51 waits for data from the preceding-stage controlling unit 1 (step S11).

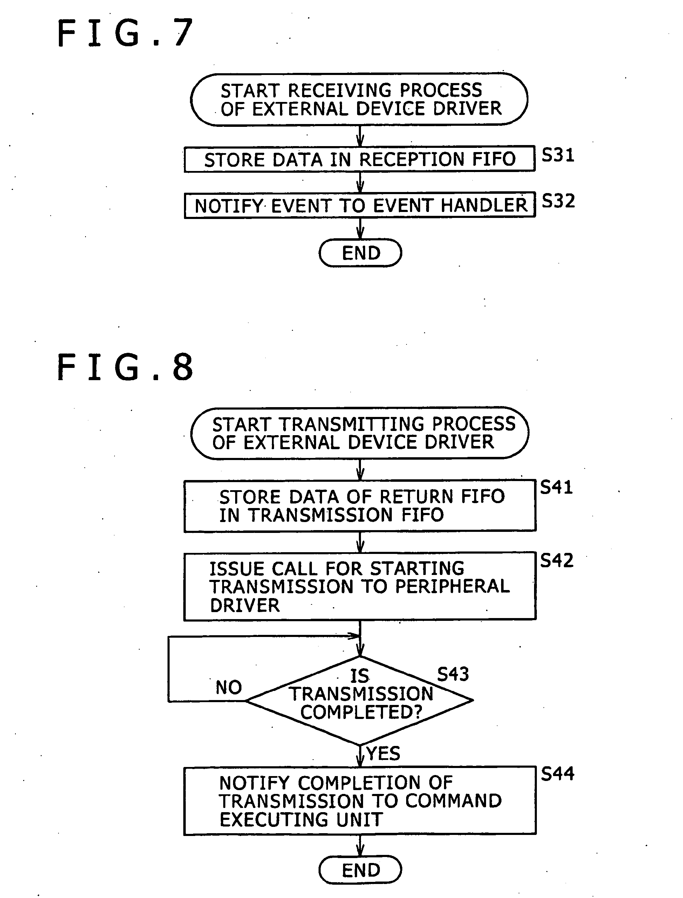

In addition, when receiving a call for starting a transmitting process from the external device driver 52 (step S42 in FIG. 8 to be described later), the peripheral driver 51 starts the transmitting process represented in a flowchart of FIG. 6.

Specifically, the peripheral driver 51 reads a predetermined amount of data stored in the transmission FIFO 71B, and then transmits the data to the controlled device 3 via the communication controlling unit 25 (step S21). The data includes data obtained as a result of a calculation in response to the data supplied from the preceding-stage controlling unit 1, for example. Then, the peripheral driver 51 determines whether data still remains in the transmission FIFO 71B (whether the transmission FIFO 71B is empty) (step S22). When the peripheral driver 51 determines that data still remains in the transmission FIFO 71B, the peripheral driver 51 continues transmitting the data (step S21). When the peripheral driver 51 determines that no data remains in the transmission FIFO 71B, the peripheral driver 51 notifies the completion of the transmission to the external device driver 52 (step S23).

Thereafter the peripheral driver 51 ends the transmitting process.

The external device driver 52 abstracts the peripheral driver layer, and performs data calculation necessary for controlling the controlled device 3.

Specifically, the external device driver 52 starts a receiving process represented in a flowchart of FIG. 7 when receiving a call for a receiving process from the peripheral driver 51 (step S12 in FIG. 5).

Specifically, the external device driver 52 converts the data supplied from the peripheral driver 51 (step S12 in FIG. 5) into data that can be interpreted in the event handler layer, and stores the data in the reception FIFO 71A (step S31). The external device driver 52 notifies a reception event to an event handler 53 (step S32).

Thereafter the external device driver 52 ends the receiving process.

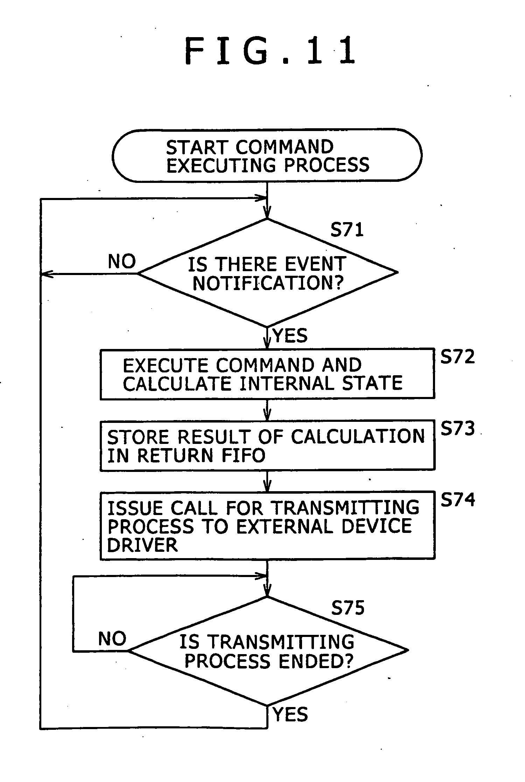

In addition, the external device driver 52 starts a transmitting process represented in a flowchart of FIG. 8 when receiving a call for starting a transmitting process (step S74 in FIG. 11 to be described later) from a command executing unit 55.

Specifically, the external device driver 52 obtains data stored in a return FIFO 72B, that is, a result of calculation based on data supplied from the preceding-stage controlling unit 1 from the return FIFO 72B. The external device driver 52 converts the data into data that can be interpreted by the communication controlling unit 25. The external device driver 52 stores the data in the transmission FIFO 71B (step S41). The external device driver 52 issues a call for a transmitting process to the peripheral driver 51 (step S42).

The external device driver 52 stands by until the external device driver 52 receives a notification indicating a completion of transmission from the peripheral driver 51 (step S23 in FIG. 6) (step S43). When receiving the notification, the external device driver 52 notifies the completion of transmission to the command executing unit 55 (step S44).

Thereafter the external device driver 52 ends the transmitting process.

The reception FIFO 71A and the transmission FIFO 71B buffer information used in the peripheral driver layer, as described above.

The event handler layer includes the event handler 53, a command FIFO 72A, and the return FIFO 72B.

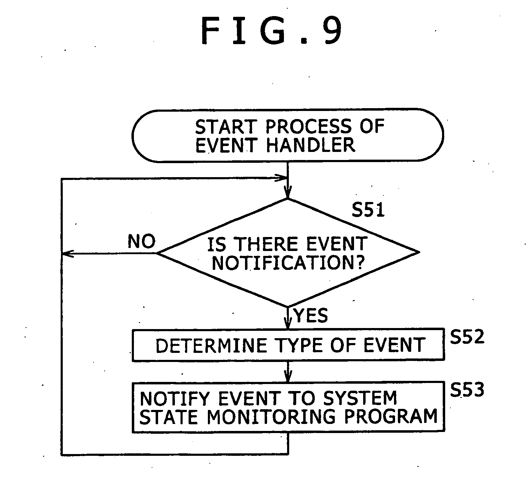

As shown in a flowchart of FIG. 9, the event handler 53 notifies a thing to do according to a command from the preceding-stage controlling unit 1. Incidentally, the event handler 53 is generally started simultaneously with the initialization of the control system 10.

The event handler 53 stands by until an event is notified (step S51). When an event is notified, the event handler 53 determines a type of the event (step S52). The event handler 53 stores data stored in the reception FIFO 71A in the command FIFO 72A, and notifies the event to a system state monitoring program 54 (step S53).

The command FIFO 72A buffers a command from the event handler 53. The return FIFO 72B buffers a result of calculation from the system state monitoring program 54 and the command executing unit 55.

The application layer includes the system state monitoring program 54, the command executing unit 55, and a storage unit 73.

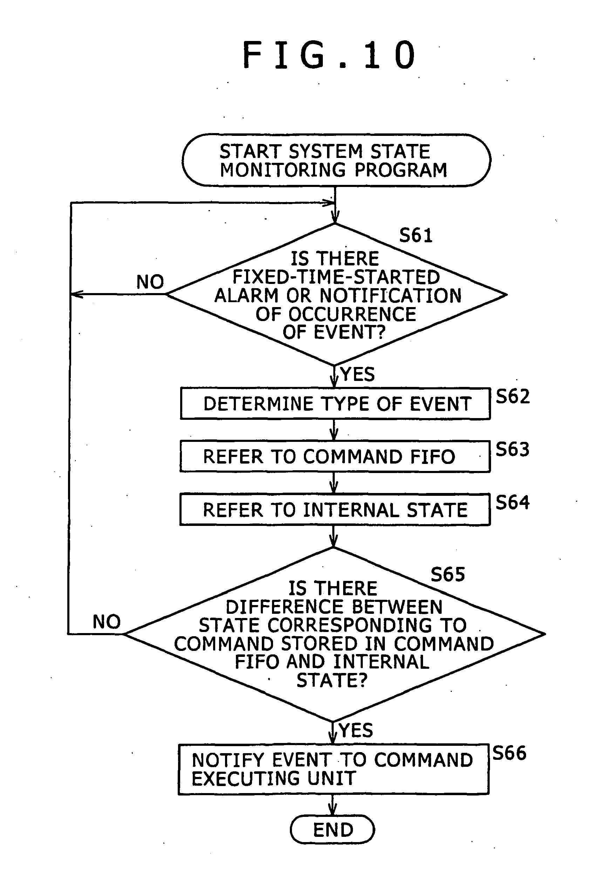

As shown in FIG. 10, the system state monitoring program 54 controls the performance of a process on the basis of an internal state of the following-stage controlling unit 2 which state is stored in the storage unit 73 and a state corresponding to the command stored in the command FIFO 72A. The system state monitoring program 54 is generally started simultaneously with the initialization of the control system 10.

The system state monitoring program 54 stands by until a built-in periodic alarm generated at predetermined time intervals is generated or until an event is notified from the event handler 53 (step S53 in FIG. 9) (step S61). When the periodic alarm is generated or when an event is notified from the event handler 53, the system state monitoring program 54 determines a type of the event (step S62). According to the type of the event, the system state monitoring program 54 refers to the command FIFO 72A, and refers to the internal state in the storage unit 73 (step S63 and step S64).

The system state monitoring program 54 compares the state corresponding to the command stored in the command FIFO 72A and the internal state stored in the storage unit 73 to determine whether there is a difference between the two states (step S65). When the system state monitoring program 54 determine that there is a difference between the two states, the system state monitoring program 54 notifies an event to the command executing unit 55, and transmits the command stored in the command FIFO 72A to the command executing unit 55 (step S66).

The command executing unit 55 performs a command executing process represented in a flowchart of FIG. 11. The command executing unit 55 is generally started simultaneously with the initialization of the control system 10.

The command executing unit 55 stands by until an event is notified from the system state monitoring program 54 (step S66 in FIG. 10) (step S71). When an event is notified, the command executing unit 55 executes a corresponding command, and calculates a new internal state (step S72). The command executing unit 55 supplies a result of the calculation to the system state monitoring program 54, and stores the result of the calculation in the return FIFO 72B (step S73). The system state monitoring program 54 stores the result of the calculation supplied from the command executing unit 55 as an internal state in the storage unit 73.

In order to reflect the result in the controlled device 3, the command executing unit 55 issues a call for a transmitting process to the external device driver 52 (step S74).

The command executing unit 55 stands by until a notification indicating that the transmitting process in the peripheral driver 51 is completed is received via the external device driver 52 (step S44 in FIG. 8) (step S75). When receiving the notification, the command executing unit 55 returns to a standby state to wait for an event notification (step S71).

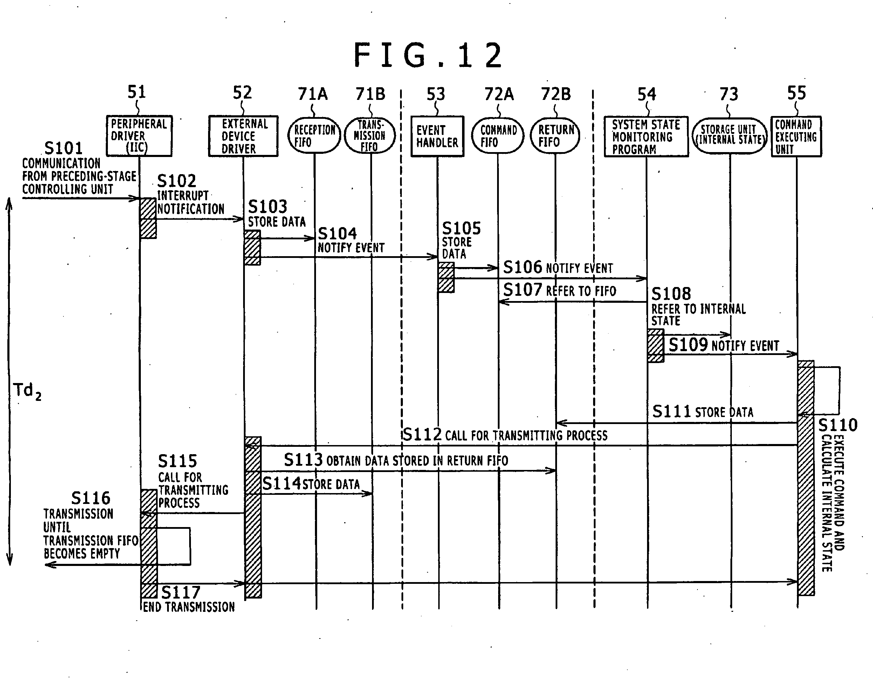

Next, an operation of the following-stage controlling unit 2 when a command supplied from the preceding-stage controlling unit 1 is received will next be described with reference to a flowchart of FIG. 12. Incidentally, description in the following will be made mainly of relations between programs of the following-stage controlling unit 2 when a command is received. Details of the processes of the programs have been described above with reference to FIGS. 5 to 11, and therefore description thereof will be omitted as appropriate.

When the peripheral driver 51 in step S101 receives a command transmitted from the preceding-stage controlling unit 1 via the communication controlling unit 24 (step S11 in FIG. 5), the peripheral driver 51 in step S102 sends an interrupt notification to the external device driver 52 (step S12 in FIG. 5).

Receiving the call for a receiving process, the external device driver 52 in step S103 converts the received command supplied from the peripheral driver 51 into data that can be interpreted in the event handler layer, and stores the command in the reception FIFO 71A (step S31 in FIG. 7). In step S104, the external device driver 52 notifies a reception event to the event handler 53 (step S32 in FIG. 7).

Receiving the notification of the reception event, the event handler 53 stores the command stored in the reception FIFO 71A in the command FIFO 72A in step S105 as a process in the case of a reception event (step S52 in FIG. 9). In addition, in step S106, the event handler 53 notifies the reception event to the system state monitoring program 54 (step S53 in FIG. 9).

After being notified of the reception event, when the system state monitoring program 54 determines that the event is a reception event (step S61 and step S62 in FIG. 10), the system state monitoring program 54 in step S107 refers to the command FIFO 72A (step S63 in FIG. 10). Also, the system state monitoring program 54 in step S108 refers to the internal state in the storage unit 73 (step S64 in FIG. 10).

When there is a difference between the two states (step S65 in FIG. 10), the system state monitoring program 54 in step S109 notifies the event to the command executing unit 55 (step S66 in FIG. 10).

Receiving the notification of the event from the system state monitoring program 54, the command executing unit 55 in step S110 executes the command, and calculates an internal state (step S72 in FIG. 11). In step S111, the command executing unit 55 stores a result of the calculation in the return FIFO 72B (step S73 in FIG. 11). In step S112, the command executing unit 55 issues a call for a transmitting process to the external device driver 52 (step S74 in FIG. 11).

Receiving the call for the transmitting process from the command executing unit 55, the external device driver 52 in step S113 obtains data stored in the return FIFO 72B from the return FIFO 72B. The external device driver 52 in step S114 converts the data into data that can be interpreted by the communication controlling unit 25, and stores the data in the transmission FIFO 71B (step S41 in FIG. 8). In step S115, the external device driver 52 issues a call for a transmitting process to the peripheral driver 51 (step S42 in FIG. 8).

Receiving the call for the transmitting process, the peripheral driver 51 in step S116 transmits all the data stored in the transmission FIFO 71B to the controlled device 3 via the communication controlling unit 25 (steps S21 and S22 in FIG. 6).

When the transmission of the data stored in the transmission FIFO 71B is completed, the peripheral driver 51 in step S117 notifies the completion of the transmission to the external device driver 52 (step S23 in FIG. 6). The external device driver 52 notifies the completion of the transmission to the command executing unit 55 (step S44 in FIG. 8).

The following-stage controlling unit 2 thus performs the process.

A time from the reception of the command from the preceding-stage controlling unit 1 by the peripheral driver 51 in step S101 to an end of the communication process when the peripheral driver 51 notifies the completion of the transmission in step S117 corresponds to a process time Td2 in FIG. 1.

Incidentally, a method in which an event handler layer is provided between a device driver layer and an application layer, and the event handler layer mediates between the device driver layer and the application layer as shown in FIG. 4 is also introduced in Japanese Patent Laid-Open No. 2001-134382.

### SUMMARY OF THE INVENTION

However, in the process procedure shown in FIG. 12, externally supplied data is transmitted and events are notified via the event handler layer in all cases (for example step S105 and step S106 in FIG. 12). The process time Td2 of the control system 10 includes a certain time required in consideration of the intervention of the event handler layer, thus making it difficult to speed up the process of the control system 10.

The present invention has been made in view of the above. It is accordingly desirable to shorten the process time of the following-stage controlling unit 2 and speed up the process of the control system. The problem is solved by a control apparatus including: inputting means for inputting control data; determining means for determining whether the control data input by the inputting means is a predetermined command; generating means for generating an input event of the control data when the determining means does not determine that the control data is the predetermined command; and controlling means for controlling a controlled device on a basis of the predetermined command input by the inputting means when the determining means determines that the control data is the predetermined command, and controlling the controlled device on a basis of the input event when the generating means generates the input event of the control data according to claim 1.

According to an embodiment of the present invention, there is provided a control apparatus including:
inputting means for inputting control data; determining means for determining whether the control data input by the inputting means is a predetermined command;
generating means for generating an input event of the control data when the determining means does not determine that the control data is the predetermined command; and controlling means for controlling a controlled device on a basis of the predetermined command input by the inputting means when the determining means determines that the control data is the predetermined command, and controlling the controlled device on a basis of the input event when the generating means generates the input event of the control data.

According to an embodiment of the present invention, there is provided a control method including: an inputting step of inputting control data; a determining step of determining whether the control data input in the inputting step is a predetermined command; a generating step of generating an input event of the control data when it is not determined in the determining step that the control data is the predetermined command; and a controlling step of controlling a controlled device on a basis of the predetermined command input in the inputting step when it is determined in the determining step that the control data is the predetermined command, and controlling the controlled device on a basis of the input event when the input event of the control data is generated in the generating step.

According to an embodiment of the present invention, there is provided a program including: an inputting step of inputting control data; a determining step of determining whether the control data input in the inputting step is a predetermined command; a generating step of generating an input event of the control data when it is not determined in the determining step that the control data is the predetermined command; and a controlling step of controlling a controlled device on a basis of the predetermined command input in the inputting step when it is determined in the determining step that the control data is the predetermined command, and controlling the controlled device on a basis of the input event when the input event of the control data is generated in the generating step.

According to an embodiment of the present invention, in a case where an inputting means/step inputs control data, a generating means/step generates an input event of the control data input by the inputting means/step, and when the input event is generated by the generating means/step, a controlling means/step controls a controlled device on a basis of the control data, when the input control data is a predetermined command, the inputting means/step generates the input event of the predetermined command in place of the generating means/step, and when the input event is generated by the inputting means/step, the controlling means/step controls the controlled device on a basis of the predetermined command input by the inputting means/step.

According to the present invention, the controlled device can be controlled quickly.

### BRIEF DESCRIPTION OF THE DRAWINGS

FIG. 1 is a diagram of assistance in explaining a conventional process time of a control system;
FIG. 2 is a diagram showing an example of the control system;
FIG. 3 is a block diagram showing an example of configuration of a following-stage controlling unit 2 in FIG. 1;
FIG. 4 is a block diagram showing an example of functional configuration of the following-stage controlling unit 2 in FIG. 1;
FIG. 5 is a flowchart of assistance in explaining a receiving process of a peripheral driver 51;
FIG. 6 is a flowchart of assistance in explaining a transmitting process of the peripheral driver 51;
FIG. 7 is a flowchart of assistance in explaining a receiving process of an external device driver 52;
FIG. 8 is a flowchart of assistance in explaining a transmitting process of the external device driver 52;
FIG. 9 is a flowchart of assistance in explaining a process of an event handler 53;
FIG. 10 is a flowchart of assistance in explaining a process of a system state monitoring program 54;
FIG. 11 is a flowchart of assistance in explaining a process of a command executing unit 55;
FIG. 12 is a flowchart of assistance in explaining the operation of the following-stage controlling unit 2 when data is received from a preceding-stage controlling unit 1;
FIGS. 13A and 13B are diagrams of assistance in explaining process times of a control system to which the present invention is applied;
FIG. 14 is a block diagram showing an example of configuration of a following-stage controlling unit 101 in FIG. 13;
FIG. 15 is a block diagram showing an example of functional configuration of the following-stage controlling unit 101;
FIG. 16 is a flowchart of assistance in explaining a receiving process of an external device driver 121;
FIG. 17 is a flowchart of assistance in explaining a process of a command executing unit 122; and
FIG. 18 is a flowchart of assistance in explaining the operation of the following-stage controlling unit 101 when a through command is received from a preceding-stage controlling unit 1.

### DETAILED DESCRIPTION OF THE PREFERRED EMBODIMENTS

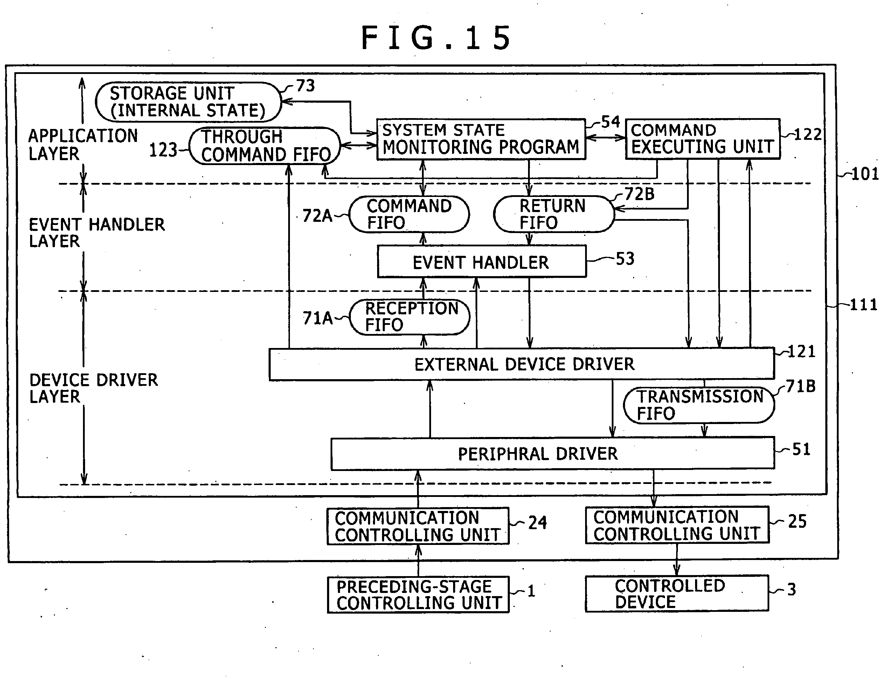

A control apparatus according to an embodiment of the present invention includes: inputting means (for example a peripheral driver 51 and an external device driver 121 in FIG. 15) for inputting control data; generating means (for example an event handler 53 in FIG. 15) for generating an input event of the control data input by the inputting means; and controlling means (for example a system state monitoring program 54 and a command executing unit 122) for controlling a controlled device on a basis of the control data when the input event is generated; wherein when the input control data is a predetermined command, the inputting means generates the input event of the predetermined command in place of the generating means, and when the input event is generated by the inputting means, the controlling means controls the controlled device on a basis of the predetermined command input by the inputting means.

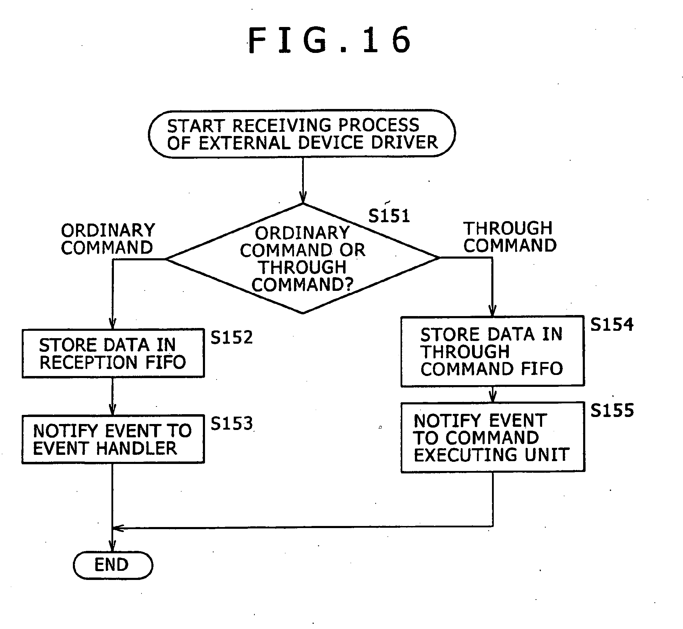

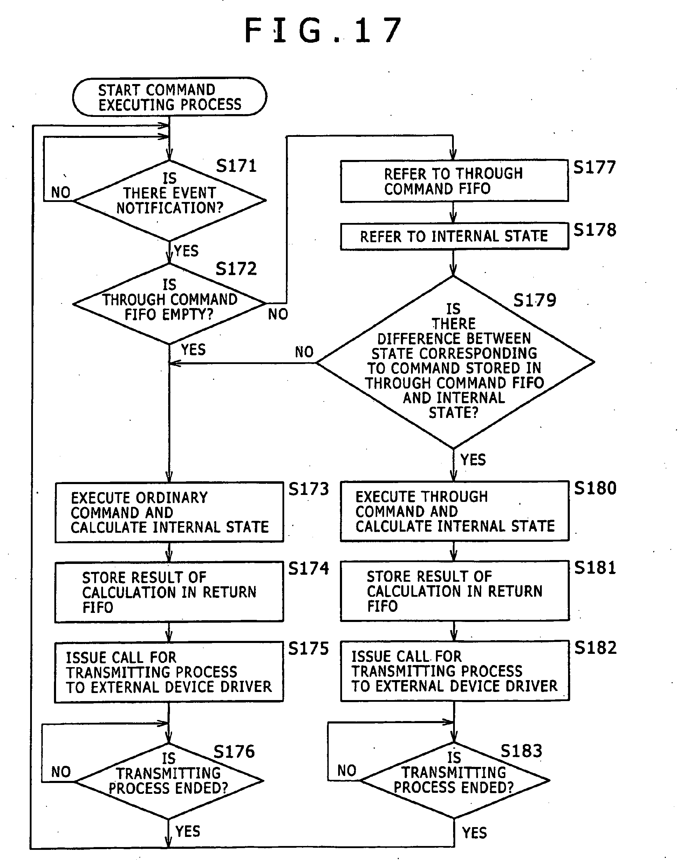

A control method or a program according to an embodiment of the present invention includes: an inputting step (for example a process shown in flowcharts of FIG. 5 and FIG. 16) of inputting control data; a generating step (for example a process shown in a flowchart of FIG. 9) of generating an input event of the control data input by the process of the inputting step; and a controlling step (for example a process shown in a flowchart of FIG. 17) of controlling a controlled device on a basis of the control data when the input event is generated by the process of the generating step; wherein when the input control data is a predetermined command, the inputting step generates the input event of the predetermined command in place of the generating step, and when the input event is generated by the process of the inputting step, the controlling step controls the controlled device on a basis of the predetermined command input by the process of the inputting step (for example a process shown in the flowchart of FIG. 17).

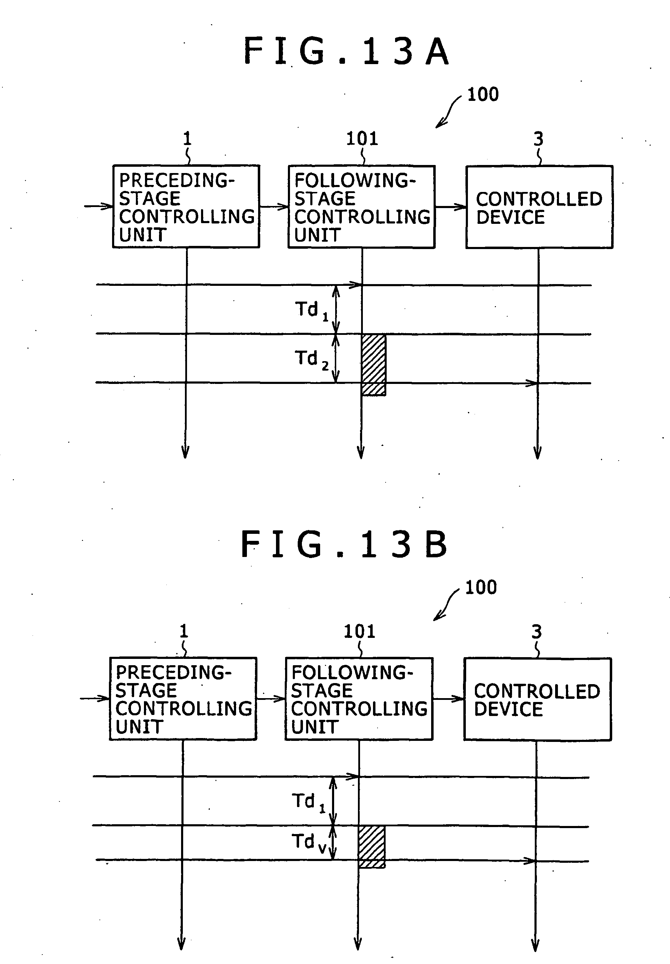

FIG. 13 shows an example of a control system 100 to which an embodiment of the present invention is applied. This control system 100 has a following-stage controlling unit 101 in place of the following-stage controlling unit 2 of the control system 10 in FIG. 1.

When a command supplied from a preceding-stage controlling unit 1 is a predetermined command (hereinafter referred to as an ordinary command), as in the case of the following-stage controlling unit 2 shown in FIG. 1 (as shown in FIG. 12), the following-stage controlling unit 101 performs data transfer and event notification via a device driver layer, an event handler layer, and an application layer, and performs a process according to the command. That is, in this case, the process is performed which process requires a time Td2 (FIG. 1) as shown in FIG. 13A.

When a command supplied from a preceding-stage controlling unit 1 is a predetermined command (hereinafter referred to as a through command), the following-stage controlling unit 101 performs data transfer and event notification without the intervention of the event handler layer, as will be described later, and performs a process according to the command. That is, in this case, the process is performed in a shorter time Tdv than in the case of an ordinary command, as shown in FIG. 13B.

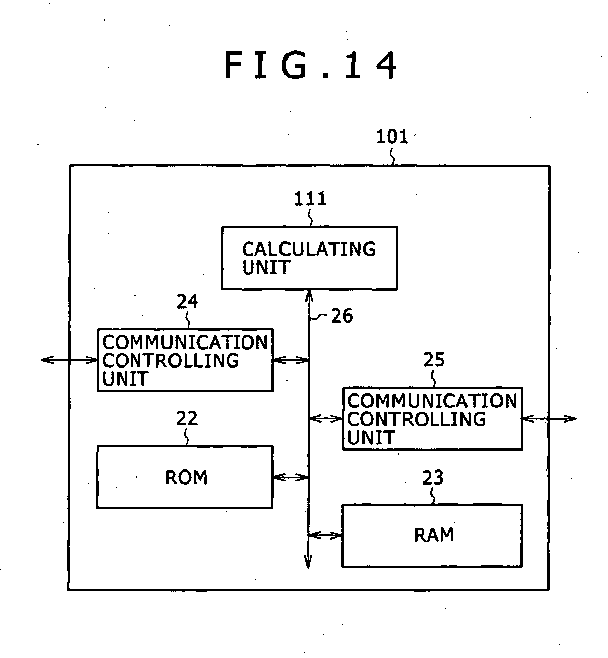

FIG. 14 shows an example of configuration of the following-stage controlling unit 101. The following-stage controlling unit 101 has a calculating unit 111 in place of the calculating unit 21 of the following-stage controlling unit 2 in FIG. 3. Other parts are similar to those of FIG. 3. Thus, the other parts are identified by the same reference numerals as in FIG. 3, and description thereof will be omitted as appropriate.

The calculating unit 111 executes a program represented in FIG. 15. In FIG. 15, an external device driver 121 is provided in place of the external device driver 52 shown in FIG. 4, and a command executing unit 122 is provided in place of the command executing unit 55. A through command FIFO 123 is further provided in an application layer. Other parts are similar to those of FIG. 4. Thus, the other parts are identified by the same reference numerals as in FIG. 4, and description thereof will be omitted as appropriate.

The external device driver 121 abstracts a peripheral driver layer, and performs data calculation necessary for controlling a controlled device 3.

Specifically, the external device driver 121 starts a receiving process represented in FIG. 16 when receiving a call for the receiving process from a peripheral driver 51 (step S12 in FIG. 5).

In step S151, the external device driver 121 determines whether a command supplied from the peripheral driver 51 (step S12 in FIG. 5) is an ordinary command or a through command. When the external device driver 121 determines that the command supplied from the peripheral driver 51 is an ordinary command, as in FIG. 7, the external device driver 121 in step S152 converts the received ordinary command into data that can be interpreted in the event handler layer, and stores the data in a reception FIFO 71A. In step S153, the external device driver 121 notifies a reception event to an event handler 53.

On the other hand, when the external device driver 121 determines in step S151 that the command supplied from the peripheral driver 51 is a through command, the process proceeds to step S154, where the external device driver 121 converts the received through command into data that can be interpreted in the application layer, and stores the data in a through command FIFO 123 in the application layer. In step S155, the external device driver 121 directly notifies a reception event to the command executing unit 122.

After notifying the event to the event handler 53 in step S153 or to the command executing unit 122 in step S155, the external device driver 121 ends the receiving process.

A transmitting process in the external device driver 121 is the same as in the external device driver 52 shown in FIG. 4 (FIG. 8), and therefore description thereof will be omitted.

Returning to FIG. 15, the command executing unit 122 performs a command executing process shown in FIG. 17. The command executing unit 122 is generally started simultaneously with the initialization of the control system 100.

In step S171, the command executing unit 122 stands by until an event is notified from a system state monitoring program 54 (step S66 in FIG. 10) or until an event is notified from the external device driver 121 (step S155 in FIG. 16). When an event is notified, the command executing unit 122 determines in step S172 whether a command is stored in the through command FIFO 123. When the command executing unit 122 determines that no command is stored in the through command FIFO 123, a similar process to that of steps S72 to S75 in FIG. 11 is performed in steps S173 to S176.

Specifically, the command executing unit 122 executes a corresponding ordinary command, and calculates a new internal state (step S173). The command executing unit 122 supplies a result of the calculation to the system state monitoring program 54, and stores the result of the calculation in a return FIFO 72B (step S174).

Then, in order to reflect the result in the controlled device 3, the command executing unit 122 issues a call for a transmitting process to the external device driver 121 (step S175). The command executing unit 122 stands by until a notification indicating that the transmitting process in the peripheral driver 51 is completed is received via the external device driver 121 (step S44 in FIG. 8) (step S176). When receiving the notification, the command executing unit 122 returns to a standby state (step S171).

On the other hand, when the command executing unit 122 determines in step S172 that a through command is present in the through command FIFO 123, the process proceeds to step S177, where the command executing unit 122 refers to the through command FIFO 123. The command executing unit 122 also refers to an internal state stored in a storage unit 73 in step S178.

In step S179, the command executing unit 122 determines whether there is a difference between a state corresponding to the command stored in the through command FIFO 123 and the internal state stored in the storage unit 73. When the command executing unit 122 determines that there is no difference, the process proceeds to step S173.

When the received event is the event of reception of the through command, the newly received through command is stored in the through command FIFO 123 (step S154 in FIG. 16). There occurs a difference between the state corresponding to the through command and the internal state stored in the storage unit 73. When the command executing unit 122 determines in step S179 that there is no difference, the received event is the event of reception of the ordinary command, and therefore the command executing process is performed on the ordinary command in steps S173 to S176.

When the command executing unit 122 in step S179 determines that there is a difference between the state corresponding to the command stored in the through command FIFO 123 and the internal state stored in the storage unit 73, the process proceeds to step S180, where the command executing unit 122 executes the corresponding command (through command), and calculates a new internal state. In step S181, the command executing unit 122 supplies a result of the calculation to the system state monitoring program 54, and stores the result of the calculation in the return FIFO 72B.

In next step S182, in order to reflect the result in the controlled device 3, the command executing unit 122 issues a call for a transmitting process to the external device driver 121.

In step S183, the command executing unit 122 stands by until a notification indicating that the transmitting process in the peripheral driver 51 is completed is received via the external device driver 121 (step S44 in FIG. 8). When receiving the notification, the command executing unit 122 returns to a standby state (step S171).

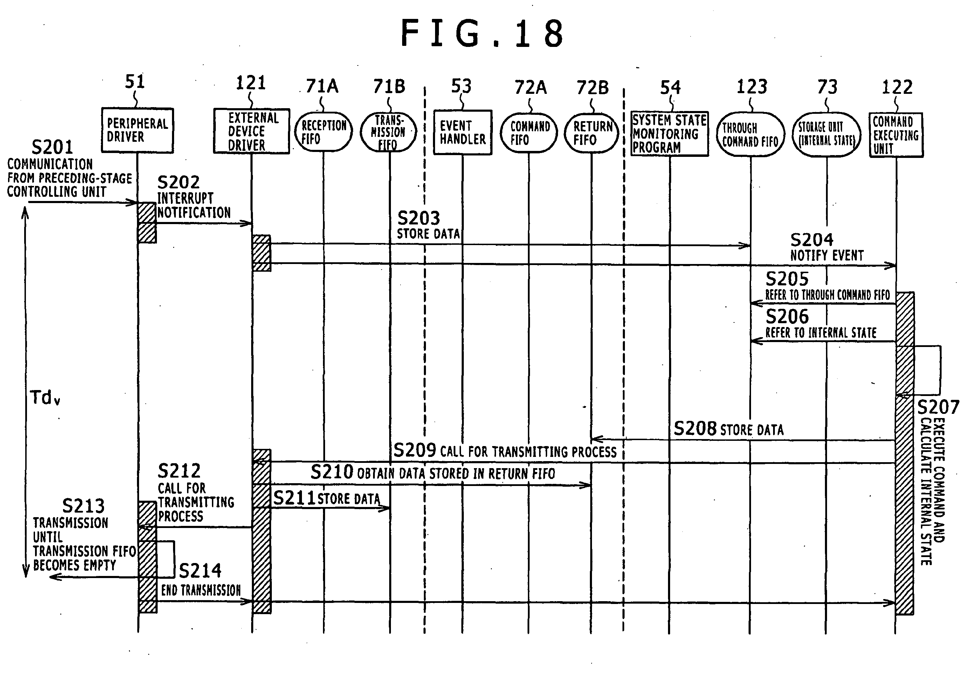

An operation of the following-stage controlling unit 101 when a command supplied from the preceding-stage controlling unit 1 is a through command will next be described with reference to a flowchart of FIG. 18. Incidentally, description in the following will be made mainly of relations between programs of the following-stage controlling unit 101 when a through command is received. Details of the processes of the programs have been described above with reference to FIG. 5, FIG. 6, FIGS. 8 to 10, FIG. 16, and FIG. 17, and therefore description thereof will be omitted as appropriate.

When the peripheral driver 51 in step S201 receives a through command transmitted from the preceding-stage controlling unit 1 via a communication controlling unit 24 (step S11 in FIG. 5), the peripheral driver 51 in step S202 sends an interrupt notification to the external device driver 121 (step S12 in FIG. 5).

Receiving the call for a receiving process (step S151 in FIG. 16), the external device driver 121 in step S203 converts the through command supplied from the peripheral driver 51 into a format that can be interpreted in the application layer, and stores the through command in the through command FIFO 123 (step S154 in FIG. 16). In step S204, the external device driver 121 directly notifies a reception event to the command executing unit 122 (step S155 in FIG. 16).

In this case, since the reception event is the event of reception of the through command (steps S171 and S172 in FIG. 17), the command executing unit 122 in step S205 after receiving the notification of the reception event refers to the through command FIFO 123 (step S177 in FIG. 17), and the command executing unit 122 in step S206 refers to an internal state stored in the storage unit 73 (step S178 in FIG. 17).

Since there is a difference between a state corresponding to the command stored in the through command FIFO 123 and the internal state stored in the storage unit 73 (step S179 in FIG. 17), the through command is executed and a new internal state is calculated in step S207 (step S180 in FIG. 17). In step S208, a result of the calculation is supplied to the system state monitoring program 54, and is stored in the return FIFO 72B.

In step S209, the command executing unit 122 issues a call for a transmitting process to the external device driver 121 (step S182 in FIG. 17).

In steps S210 to S214, a similar process to that of steps S113 to S117 in FIG. 12 is performed.

Specifically, receiving the call for the transmitting process from the command executing unit 122, the external device driver 121 in step S210 obtains data stored in the return FIFO 72B from the return FIFO 72B. The external device driver 121 in step S211 converts the data into data that can be interpreted by a communication controlling unit 25, and stores the data in a transmission FIFO 71B (step S41 in FIG. 8). In step S212, the external device driver 121 issues a call for a transmitting process to the peripheral driver 51 (step S42 in FIG. 8).

Receiving the call for the transmitting process, the peripheral driver 51 in step S213 transmits all the data stored in the transmission FIFO 71B to the controlled device 3 via the communication controlling unit 25 (steps S21 and S22 in FIG. 6).

When the transmission of the data stored in the transmission FIFO 71B is completed, the peripheral driver 51 in step S214 notifies the completion of the transmission to the external device driver 121 (step S23 in FIG. 6). The external device driver 121 notifies the completion of the transmission to the command executing unit 122 (step S44 in FIG. 8).

The following-stage controlling unit 101 thus performs the process. A time from the reception of the data from the preceding-stage controlling unit 1 by the peripheral driver 51 in step S201 to an end of the communication process when the peripheral driver 51 notifies the completion of the transmission in step S214 corresponds to a process time Tdv in FIG. 13B.

When an ordinary command is supplied from the preceding-stage controlling unit 1, the following-stage controlling unit 101 performs data transfer and event notification via the event handler layer according to the process procedure shown in FIG. 12. That is, the event handler 53 generates a reception event. Consequently a process time is a time Td2. On the other hand, when a through command is received, the following-stage controlling unit 101 performs data transfer and event notification without the intervention of the event handler layer according to the process procedure shown in FIG. 18. That is, the event handler 53 and the system state monitoring program 54 are not executed. An event notification is directly provided from the device driver layer to the application layer. That is, the external device driver 121 generates a reception event. A process time as a result is the time Tdv. Thus, the process in the control system 100 can be performed more quickly than in the case of an ordinary command.

In a case where a television receiver performs control to decrease the brightness of a liquid crystal panel for a moment at a time of a channel change, for example, when the preceding-stage controlling unit 1 is a microcomputer for image processing, the following-stage controlling unit 2 is a microcomputer for controlling the liquid crystal panel, and the controlled device 3 is the liquid crystal panel, as shown in FIG. 2A, and when the microcomputer for controlling the liquid crystal panel as the following-stage controlling unit 2 recognizes, as a through command, a command to decrease the brightness of the liquid crystal panel from the microcomputer for image processing as the preceding-stage controlling unit 1, it is possible to control the liquid crystal panel as the controlled device 3 quickly, for example darken an image quickly.

The embodiment as described above can control the controlled device 3 quickly according to a command.

Incidentally, since the through command FIFO 123 is separately provided for through commands, FIFO control is simplified. In addition, the FIFO does not need processing of a list structure or the like, so that an amount of usage of the RAM can be reduced.

In addition, since FIFO control is simplified, an interrupt processing time at a time of communication reception can be shortened, and the operation of an operating system is limited by an interrupt for a shorter time.

Incidentally, as program executed by the calculating unit 111 in the following-stage controlling unit 101, a computer program read from a removable medium (recording medium) such as a magnetic disk (including floppy disks), an optical disk (including CD-ROM (Compact Disk-Read Only Memory) and DVD (Digital Versatile Disk)), a magneto-optical disk (including MD (Mini-Disk)), a semiconductor memory or the like connected via a driver not shown in the figures can be installed on a hard disk, for example.

## Claims

1. A control apparatus for controlling a controlled device according to control data, said control apparatus comprising:
inputting means (51, 121) for inputting said control data,
generating means (53) for generating an input event of said control data and
controlling means (54, 122) for controlling said controlled device;
**characterized by**
determining means for determining whether said control data input by said inputting means (51, 121) is a predetermined command;
said generating means (53) for generating an input event of said control data when said determining means does not determine that said control data is said predetermined command; and
said controlling means (54, 122) for controlling said controlled device -on a basis of said predetermined command input by said inputting means (51, 121) when said determining means determines that said control data is said predetermined command, and controlling said controlled device on a basis of said input event when said generating means (53) generates said input event of said control data.

2. A control method in a control apparatus, said control apparatus controlling a controlled device according to control data, said control method comprising the steps of_inputting said control data;
and is further **characterized by** the steps of:
determining whether said control data input in said inputting step is a predetermined command;
generating an input event of said control data when it is not determined in said determining step that said control data is said predetermined command; and
controlling said controlled device on a basis of said predetermined command input in said inputting step when it is determined in said determining step that said control data is said predetermined command, and controlling said controlled device on a basis of said input event when said input event of said control data is generated in said generating step.

3. A computer program including instructions which, when executed by a computer system, would cause the computer system to perform all method steps of the method defined by claim 2.

## Patentansprüche

1. Steuervorrichtung zum Steuern einer gesteuerten Einrichtung gemäß Steuerdaten,
wobei die Steuervorrichtung aufweist:
eine Eingabeeinrichtung (51, 121) zum Eingeben der Steuerdaten,
eine Erzeugungseinrichtung (53) zum Erzeugen eines Eingabeereignisses der Steuerdaten und
eine Steuereinrichtung (54, 122) zum Steuern der gesteuerten Einrichtung;
**gekennzeichnet durch**
eine Bestimmungseinrichtung zum Bestimmen, ob die Steuerdaten, die über die Eingabeeinrichtung (51, 121) eingegeben werden, ein vorbestimmtes Kommando sind;
die Erzeugungseinrichtung (53) zum Erzeugen eines Eingabeereignisses der Steuerdaten, wenn die Bestimmungseinrichtung nicht bestimmt, dass die Steuerdaten das vorbestimmte Kommando sind; und
die Steuereinrichtung (54, 122) zum Steuern der gesteuerten Einrichtung auf der Grundlage des vorbestimmten Kommandos, welches über die Eingabeeinrichtung (51, 121) eingegeben wurde, wenn die Bestimmungseinrichtung bestimmt, dass die Steuerdaten das vorbestimmte Kommando sind, und zum Steuern der gesteuerten Einrichtung auf der Grundlage des Eingabeereignisses, wenn die Erzeugungseinrichtung (53) das Eingabeereignis der Steuerdaten erzeugt.

2. Steuerverfahren in einer Steuervorrichtung,
wobei die Steuervorrichtung eine gesteuerte Einrichtung gemäß Steuerdaten steuert, wobei das Steuerverfahren die Schritte des Eingebens der Steuerdaten aufweist;
und des Weiteren **gekennzeichnet ist durch** die Schritte:
Bestimmen, ob die Steuerdaten, die im Eingabeschritt eingegeben wurden, ein vorbestimmtes Kommando sind;
Erzeugen eines Eingabeereignisses der Steuerdaten, wenn im Bestimmungsschritt nicht bestimmt wird, dass die Steuerdaten das vorbestimmte Kommando sind; und
Steuern der gesteuerten Einrichtung auf der Grundlage des vorbestimmten Kommandos, welches im Eingabeschritt eingegeben wurde, wenn im Bestimmungsschritt bestimmt wird, dass die Steuerdaten das vorbestimmte Kommando sind, und Steuern der gesteuerten Einrichtung auf der Grundlage des Eingabeereignisses, wenn das Eingabeereignis der Steuerdaten im Erzeugungsschritt erzeugt werden.

3. Computerprogramm mit Instruktionen, die, wenn sie durch ein Computersystem ausgeführt werden, das Computersystem dazu bringen, sämtliche Verfahrensschritte des Verfahrens, das im Anspruch 2 definiert ist, auszuführen.

## Revendications

1. Appareil de commande pour commander un dispositif commandé selon des données de commande, ledit appareil de commande comprenant :
des moyens d'entrée (51, 121) pour entrer lesdites données de commande,
des moyens de génération (53) pour générer un événement d'entrée desdites données de commande, et
des moyens de commande (54, 122) pour commander ledit dispositif commandé ;
**caractérisé par**
des moyens de détermination pour déterminer si lesdites données de commande entrées par lesdits moyens d'entrée (51, 121) correspondent à une commande prédéterminée ;
lesdits moyens de génération (53) pour générer un événement d'entrée desdites données de commande lorsque lesdits moyens de détermination ne déterminent pas que lesdites données de commande correspondent à ladite commande prédéterminée ; et
lesdits moyens de commande (54, 122) pour commander ledit dispositif commandé sur une base de ladite commande prédéterminée entrée par lesdits moyens d'entrée (51, 121) lorsque lesdits moyens de détermination déterminent que lesdites données de commande correspondent à ladite commande prédéterminée, et commander ledit dispositif commandé sur une base dudit événement d'entrée lorsque lesdits moyens de génération (53) génèrent ledit événement d'entrée desdites données de commande.

2. Procédé de commande dans un appareil de commande, ledit appareil de commande commandant un dispositif commandé selon des données de commande, ledit procédé de commande comprenant l'étape consistant à entrer lesdites données de commande ;
et étant **caractérisé en outre par** les étapes consistant à :
déterminer si lesdites données de commande entrées au cours de ladite étape d'entrée correspondent à une commande prédéterminée ;
générer un événement d'entrée desdites données de commande lorsqu'il n'est pas déterminé dans ladite étape de détermination que lesdites données de commande correspondent à ladite commande prédéterminée ; et
commander ledit dispositif commandé sur une base de ladite entrée de commande prédéterminée au cours de ladite étape d'entrée lorsqu'il est déterminé dans ladite étape de détermination que lesdites données de commande correspondent à ladite commande prédéterminée, et commander ledit dispositif commandé sur une base dudit événement d'entrée lorsque ledit événement d'entrée desdites données de commande est généré dans ladite étape de génération.

3. Programme informatique comprenant des instructions qui, lorsqu'elles sont exécutées par un système informatique, amèneraient le système informatique à exécuter toutes les étapes de procédé du procédé selon la revendication 2.
